# EUROPÄISCHE PATENTSCHRIFT

(11) **EP 0 918 926 B1**
(45) Veröffentlichungstag und Bekanntmachung des Hinweises auf die Patenterteilung: **07.05.2003**
(21) Anmeldenummer: 98912210.6
(22) Anmeldetag: 13.02.1998
(51) Int. Cl.: F02M 37/02

(54) **FÖRDERAGGREGAT ZUM FÖRDERN VON KRAFTSTOFF AUS EINEM KRAFTSTOFFTANK**
PUMPING UNIT TO SUPPLY FUEL FROM A FUEL TANK
GROUPE D'ALIMENTATION POUR ACHEMINER DU CARBURANT A PARTIR D'UN RESERVOIR DE CARBURANT

(30) Priorität: 19.06.1997 DE 19725939
(43) Veröffentlichungstag der Anmeldung: 02.06.1999
(73) Patentinhaber: ROBERT BOSCH GMBH, 70442 Stuttgart (DE)
(72) Erfinder: SOYER, Wolfgang, D-75446 Wiernsheim (DE); RÖSSLER, Otto, D-71726 Benningen (DE); BAIER, Klaus, D-71254 Ditzingen (DE)
(86) Internationale Anmeldenummer: DE9800410
(87) Internationale Veröffentlichungsnummer: WO98059167

(56) Entgegenhaltungen:
- EP-A- 0 305 350
- DE-A- 4 444 854
- DE-A- 19 547 243
- PATENT ABSTRACTS OF JAPAN vol. 14, no. 436, 18.September 1990 & JP 02 173352 A (HORIE KINZOKU KOGYO KK), 4.Juli 1990,

## Beschreibung

### Stand der Technik

Die Erfindung betrifft ein Förderaggregat zum Fördern von Kraftstoff aus einem Kraftstofftank zu einer Brennkraftmaschine eines Kraftfahrzeugs der im Oberbegriff des Anspruchs 1 definierten Gattung.

Bei einem bekannten Förderaggregat dieser Art
(DE 44 44 854 A1) ist die elektrische Kraftstofförderpumpe in einem Filtertopf aufgenommen, der im Innern des Kraftstofftanks angeordnet ist. Im Filtertopf ist ein dem Saugstutzen der Förderpumpe vorgeordneter Grob- oder Vorfilter und ein auf der Druckseite der Förderpumpe angeordneter Feinoder Hauptfilter aufgenommen. Der Filtertopf ist mit einem Filterdeckel verschlossen, der einen über den Hauptfilter mit dem Druckstutzen der Förderpumpe in Verbindung stehenden Auslaßstutzen aufweist, der seinerseits über eine Verbindungsleitung an einem Anschlußstutzen für eine zur Brennkraftmaschine führende Förderleitung angeschlossen ist. Der Anschlußstutzen ist zusammen mit einem weiteren Anschlußstutzen für eine von der Brennkraftmaschine kommende, überschüssigen Kraftstoffs führende Rücklaufleitung in einem den Kraftstofftank verschließenden Tankflansch angeordnet. Der Anschlußstutzen für die Rücklaufleitung ist an einem durch den Tankflansch hindurch ins Tankinnere hineinragenden Tauchrohr ausgebildet.

### Vorteile der Erfindung

Das erfindungsgemäße Förderaggregat zum Fördern von Kraftstoff aus einem Kraftstofftank zu einer Brennkraftmaschine eines Kraftfahrzeugs mit den kennzeichnenden Merkmalen des
Anspruchs 1 hat den Vorteil, daß im Gegensatz zu dem bekannten Förderaggregat der von der Brennkraftmaschine zurückgeführte, bereits schmutzgefilterte Kraftstoff nicht wieder dem im Kraftstofftank vorhandenen "verschmutzten" Kraftstoff zugeführt wird und nach Vermischung mit diesem durch den Vorfilter erneut gesäubert werden muß, sondern direkt dem Ansaugstutzen der Förderpumpe im Saugstrom nach dem Vorfilter zugeführt wird. Dadurch ist bereits der überwiegende Teil (ca. 80%) der kontinuierlich von der Förderpumpe angesaugten Kraftstoffmenge gefiltert, was bedeutet, daß eine geringere Kraftstoffmenge durch den Vorfilter angesaugt wird. Damit kann bei gleichem Druckabfall die Maschenweite des Vorfilters (bei der bekannten Elektrokraftstoffpumpe üblicherweise 60 µm) kleiner gemacht und damit bereits die Vorfilterung verbessert werden. Bessere Filterung bedeutet einen geringeren Verschleiß der Förderpumpe. Da üblicherweise auf der Druckseite der Förderpumpe noch ein Fein- oder Hauptfilter mit einer Maschenweite von ca. 4 µm vorgesehen ist, ist der größte Teil der der Förderpumpe zugeführten Kraftstoffmenge wesentlich besser gereinigt als dies mit dem Vorfiltern möglich ist, was den Verschleiß der Förderpumpe weiter reduziert und die Schmutzbeladung des verbesserten Vorfilters herabsetzt.

Durch die in den weiteren Ansprüchen aufgeführten Maßnahmen sind vorteilhafte Weiterbildungen und Verbesserungen des im Anspruch 1 angegebenen Förderaggregats möglich.

Gemäß einer bevorzugten Ausführungsform der Erfindung ist die Mündungsöffnung der Rücklaufleitung zur Ansaugöffnung hin weisend und mit Axialabstand zu dieser angeordnet, wobei vorzugsweise die Ebenen von Ansaugöffnung und Mündungsöffnung parallel zueinander ausgerichtet sind. Bei dieser
konstruktiven Ausbildung wird ein Saugstrahleffekt erreicht, wobei der aus der Rücklaufleitung austretende Kraftstoff den in der Umgebung des Ansaugstutzens befindlichen Kraftstoff in den Ansaugstutzen hinein mitreißt. Die Menge des mitgerissenen Kraftstoffs entspricht der momentanen Verbrauchsmenge der Brennkraftmaschine, so daß durch den Vorfilter hindurch nur die momentane Verbrauchsmenge angesaugt werden muß. Da die Förderpumpe den Kraftstoff damit weniger stark beschleunigen muß, tritt im Saugkanal der Förderpumpe ein geringerer Druckabfall auf. Bei der üblichen Ausbildung der Förderpumpe als Strömungspumpe bedeutet dies eine geringere Kraft des Laufrads auf den Ansaugdeckel und ein besseres Verschleißverhalten.

Gemäß einer vorteilhaften Ausführungsform der Erfindung ist der Öffnungsquerschnitt der Mündungsöffnung der
Rücklaufleitung etwa gleich dem kleinsten lichten Querschnitt des Ansaugstutzens bemessen. Damit wird vorteilhaft die Austrittsgeschwindigkeit des rücklaufenden Kraftstoffs aus der Mündungsöffnung der Rücklaufleitung der
Eintrittsgeschwindigkeit des Kraftstoffes in den Saugstutzen angepaßt, d.h. etwa gleich gemacht.

### Zeichnung

Die Erfindung ist anhand eines in der Zeichnung dargestellten Ausführungsbeispiels in der nachfolgenden Beschreibung näher erläutert. Es zeigen jeweils in schematischer Darstellung:
- Fig. 1: einen Schnitt eines Kraftstofftanks mit im Kraftstofftank angeordnetem Förderaggregat zum Fördern von Kraftstoff,
- Fig. 2: eine vergrößerte Darstellung des Ausschnitts II in Fig. 1.

### Beschreibung des Ausführungsbeispiels

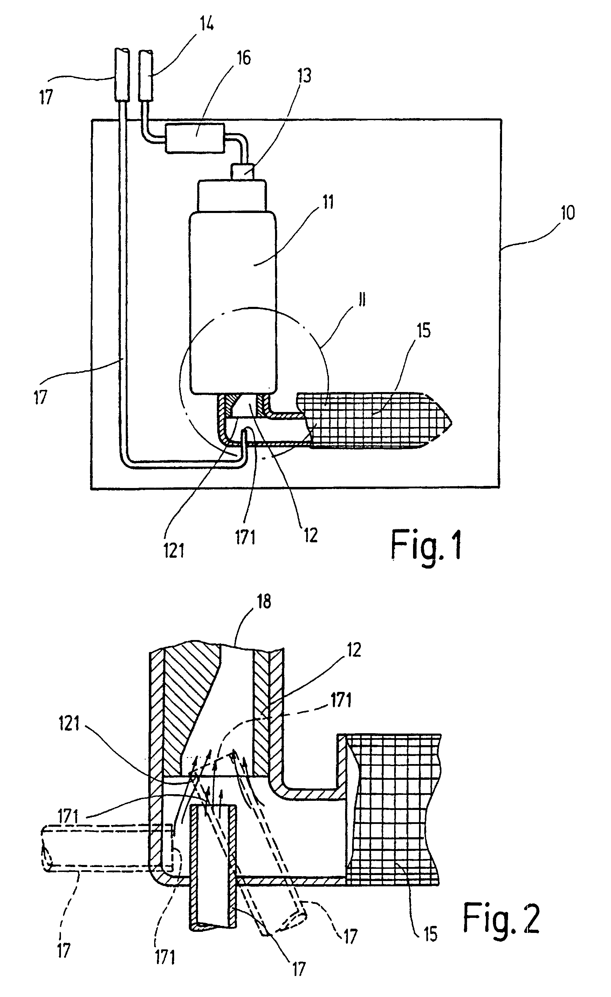

Das in Fig.1 schematisch dargestellte Förderaggregat zum Fördern von Kraftstoff aus einem Kraftstofftank 10 zu einer hier nicht dargestellten Brennkraftmaschine ist im Kraftstofftank 10 angeordnet und umfaßt eine elektrisch angetriebene Förderpumpe 11, die über einen Saugstutzen 12 Kraftstoff aus dem Kraftstofftank 10 ansaugt und über einen Druckstutzen 13 in eine abschnittweise dargestellte Förderleitung 14 drückt, einen dem Saugstutzen 12 im Saugstrom vorgeordneten Grob- oder Vorfilter 15 zur Zurückhaltung von im Kraftstoff befindlichen Schmutzparktikeln, einen dem Druckstutzen 13 zugeordneten, im Förderstrom angeordneten Fein- oder Hauptfilter 16 sowie eine Rücklaufleitung 17 zum Rückführen von in der Brennkraftmaschine nicht verbrauchten, von der Förderpumpe 11 geförderten Kraftstoff. Vorfilter 15 und Hauptfilter 16, die hier schematisch dargestellt sind, sind üblicherweise - wie dies in der DE 44 44 854 A1 beschrieben ist - in einem sog. Filtertopf angeordnet, in welcher die Förderpumpe 11 aufgenommen ist. Der Vorfilter 15, auch als Saugsieb bezeichnet, hat üblicherweise eine Maschenweite von 60 µm und dient zum Zurückhalten von größeren Schmutzpartikeln im Kraftstoff, während die Maschenweite des Hauptfilters 16 ca. 4 µm beträgt. Im Betrieb der Brennkraftmaschine saugt die Förderpumpe 11 Kraftstoff über den Vorfilter 15 aus dem Innern des Kraftstofftanks 10 an und pumpt diesen nach Feinfilterung in dem Hauptfilter 16 durch die Förderleitung 14 zur Brennkraftmaschine. An einem dort vorgesehenen Druckregler wird die von der Brennkraftmaschine nicht verbrauchte Kraftstoffördermenge über die Rücklaufleitung 17 in den Kraftstofftank 10 zurückgeführt. Im Kraftstofftank 10 ist die Rücklaufleitung 17 nunmehr so geführt, daß ihre Mündungsöffnung 171 im Saugstrom der Förderpumpe 11 zwischen dem Vorfilter 15 und dem Saugstutzen 12 liegt, und zwar so, daß die Mündungsöffnung 171 zur Ansaugöffnung 121 des Saugstutzens 12 hin weist und mit etwas Axialabstand zu dieser angeordnet ist. Wie aus der vergrößerten Darstellung in Fig. 2 zu erkennen ist, ist dabei der Öffnungsquerschnitt der Mündungsöffnung 171 etwa gleich dem kleinsten lichten Querschnitt des Saugstutzens 12 bemessen, der in Fig. 2 mit 18 gekennzeichnet ist. Durch diese Anordnung der Rücklaufleitung 17 wird der von der Brennkraftmaschine zurückkommende Kraftstoff, der feinstgefiltert ist, unmittelbar der Förderpumpe 11 wieder zugeführt und muß nicht von der Förderpumpe 11 über den Vorfilter 15 angesaugt werden. Durch die beschriebene Anordnung der Mündungsöffnung 171 der Rücklaufleitung 17 im Abstand vor der Ansaugöffnung 121 des Saugstutzens 12 wird ein sog. Saugstrahleffekt erreicht, durch dessen Wirkung der aus der Rücklaufleitung 17 ausströmende Kraftstoff den am Saugstutzen 12 vorhandenen Kraftstoff in den Saugstutzen 12 hinein mitreißt. Dadurch, daß der Mündungsquerschnitt der Mündungsöffnung 171 in etwa gleich groß gemacht ist wie der kleinste lichte Querschnitt im Saugstutzen 12 ist die Eintrittsgeschwindigkeit des Kraftstoffes in den Saugstutzen 12 etwa gleich der Austrittsgeschwindigkeit des zurückgeführten Kraftstoffs aus der Rücklaufleitung 17.

Die Ansaugöffnung 121 des Saugstutzens und die Mündungsöffnung 171 der Rücklaufleitung 17 können wie in Fig. 2 mit durchgezogenen Linien dargestellt in etwa zueinander prallelen Ebenen angeordnet sein. Die Ansaugöffnung 121 und die Mündungsöffnung 171 können jedoch auch wie in Fig. 2 mit gestrichelten Linien dargestellt in zueinander geneigten Ebenen angeordnet sein. Der Verlauf des Endbereichs der Rücklaufleitung 17 mit der Mündungsöffnung 171 kann wie in Fig. 2 mit durchgezogenen Linien dargestellt etwa parallel zum Saugstutzen 12 sein oder wie mit gestrichelten Linien dargestellt zum Saugstutzen 12 geneigt oder rechtwinklig zu diesem.

Die Erfindung ist nicht auf das beschriebene Ausführungsbeispiel beschränkt. So muß die Kraftstoffpumpe nicht im Kraftstofftank selbst angeordnet werden, sondern kann auch über eine Ansaugleitung mit dem Kraftstofftank verbunden sein. In diesem Fall ist der Vorfilter in der Ansaugleitung oder vor der Ansaugöffnung der Ansaugleitung im Kraftstofftank angeordnet.

## Patentansprüche

1. Förderaggregat zum Fördern von Kraftstoff aus einem Kraftstofftank (10) zu einer Brennkraftmaschine eines Kraftfahrzeugs, mit einer Förderpumpe (11), die über einen Saugstutzen (12) Kraftstoff ansaugt und über einen Druckstutzen (13) in eine Förderleitung (14) drückt, mit einem dem Saugstutzen (12) im Saugstrom vorgeordneten Vorfilter (15) zur Zurückhaltung von im Kraftstoff befindlichen Schmutzpartikeln und mit einer Rücklaufleitung (17) zum Rückführen von durch die Förderpumpe (11) gefördertem, in der Brennkraftmaschine nicht verbrauchtem Kraftstoff, **dadurch gekennzeichnet, daß** die Mündungsöffnung (171) der Rücklaufleitung (17) im Saugstrom der Förderpumpe (11) zwischen Vorfilter (15) und Saugstutzen (12) angeordnet ist.

2. Aggregat nach Anspruch 1, **dadurch gekennzeichnet, daß** die Mündungsöffnung (171) der Rücklaufleitung (17) zur Ansaugöffnung (121) des Saugstutzens (12) hin weisend angeordnet ist.

3. Aggregat nach Anspruch 2, **dadurch gekennzeichnet, daß** die Ebenen von Ansaugöffnung (121) des Saugstutzens (12) und Mündungsöffnung (171) der Rücklaufleitung (17) parallel zueinander ausgerichtet sind.

4. Aggregat nach Anspruch 2, daß die Ebenen von Ansaugöffnung (121) des Saugstutzens (12) und Mündungsöffnung (171) der Rücklaufleitung (17) zueinander geneigt sind.

5. Aggregat nach einem der Ansprüche 2 - 4, **dadurch gekennzeichnet, daß** der Öffnungsquerschnitt der Mündungsöffnung (171) der Rücklaufleitung (17) etwa gleich dem kleinsten lichten Querschnitt (18) des Stutzens (12) bemessen ist.

6. Aggregat nach einem der Ansprüche 1 - 5, **dadurch gekennzeichnet, daß** die Förderpumpe (11) im Innern des Kraftstofftanks (10) angeordnet und der Vorfilter (15) als ein an den Saugstutzen (12) angesetztes Saugsieb ausgebildet ist.

7. Aggregat nach einem der Ansprüche 1 - 5, **dadurch gekennzeichnet, daß** der Saugstutzen (12) der Förderpumpe (11) an einer aus dem Kraftstofftank (10) herausgeführten Ansaugleitung angeschlossen ist und daß der Vorfilter in der Ansaugleitung oder vor der Ansaugöffnung der Ansaugleitung im Kraftstofftank (10) angeordnet ist.

8. Aggregat nach einem der Ansprüche 1 - 7, **dadurch gekennzeichnet, daß** dem Druckstutzen der Förderpumpe (11) ein im Förderstrom angeordneter Fein- oder Hauptfilter (16) zugeordnet ist.

## Claims

1. Feed unit for feeding fuel from a fuel tank (10) to an internal combustion engine of a motor vehicle, with a feed pump (11) which draws fuel in via a suction neck (12) and forces it into a feed line (14) via a pressure neck (13), with a preliminary filter (15), arranged upstream of the suction neck (12) in the suction flow, for retaining dirt particles present in the fuel and with a return line (17) for returning fuel fed by the feed pump (11) which has not been consumed in the internal combustion engine, **characterized in that** the outlet opening (171) of the return line (17) is arranged between the preliminary filter (15) and the suction neck (12) in the suction flow of the feed pump (11).

2. Unit according to Claim 1, **characterized in that** the outlet opening (171) of the return line (17) is arranged facing towards the intake opening (121) of the suction neck (12).

3. Unit according to Claim 2, **characterized in that** the planes of the intake opening (121) of the suction neck (12) and of the outlet opening (171) of the return line (17) are aligned parallel to one another.

4. Unit according to Claim 2, **characterized in that** the planes of the intake opening (121) of the suction neck (12) and of the outlet opening (171) of the return line (17) are inclined in relation to one another.

5. Unit according to one of Claims 2 - 4, **characterized in that** the opening cross section of the outlet opening (171) of the return line (17) is dimensioned so as to be roughly the same as the smallest clear cross section (18) of the neck (12).

6. Unit according to one of Claims 1 - 5, **characterized in that** the feed pump (11) is arranged inside the fuel tank (10) and the preliminary filter (15) is designed as a suction screen attached to the suction neck (12).

7. Unit according to one of Claims 1 - 5, **characterized in that** the suction neck (12) of the feed pump (11) is connected to an intake line led out of the fuel tank (10), and **in that** the preliminary filter is arranged in the intake line or in front of the intake opening of the intake line in the fuel tank (10).

8. Unit according to one of Claims 1 - 7, **characterized in that** a fine or main filter (16) arranged in the feed flow is assigned to the pressure neck of the feed pump (11).

## Revendications

1. Groupe d'alimentation pour transférer du carburant d'un réservoir (10) à un moteur à combustion interne d'un véhicule, comprenant une pompe de transfert (11) aspirant le carburant par un ajutage d'aspiration (12) et le refoulant dans une conduite de transfert (14) par un ajutage de refoulement (13), un préfiltre (15) en amont de l'ajutage d'aspiration (12) dans le sens de l'aspiration, pour retenir les particules de saletés dû carburant ainsi qu'une conduite de retour (17) pour reconduire le carburant débité par la pompe de transfert (11) mais non consommé par le moteur à combustion interne,
**caractérisé en ce que**
l'embouchure (171) de la conduite de retour (17) est prévue dans la veine d'aspiration de la pompe de transfert (11) entre le préfiltre (15) et l'ajustage d'aspiration (12).

2. Groupe d'aspiration selon la revendication 1,
**caractérisé en ce que**
l'embouchure (171) de la conduite de retour (17) est dirigée vers l'orifice d'aspiration (121) de l'ajustage d'aspiration (12).

3. Groupe d'aspiration selon la revendication 2,
**caractérisé en ce que**
les plans de l'orifice d'aspiration (121) de l'ajutage d'aspiration (12) et de l'embouchure (171) de la conduite de retour (17) sont parallèles.

4. Groupe d'aspiration selon la revendication 2,
**caractérisé en ce que**
les plans de l'orifice d'aspiration (121) de l'ajutage d'aspiration (12) et de l'embouchure (171) de la conduite de retour (17) sont inclinés l'un par rapport à l'autre.

5. Groupe d'aspiration selon l'une quelconque des revendications 2 à 4,
**caractérisé en ce que**
la section d'ouverture de l'embouchure (171) de la conduite de retour (17) est sensiblement égale à la plus petite section libre (18) de l'ajutage (12).

6. Groupe d'aspiration selon l'une quelconque des revendications 1 à 5,
**caractérisé en ce que**
la pompe de transfert (11) est placée à l'intérieur du réservoir (10) et le préfiltre (15) est réalisé sous la forme d'un tamis d'aspiration installé sur l'ajutage d'aspiration (12).

7. Groupe d'aspiration selon l'une quelconque des revendications 1 à 5,
**caractérisé en ce que**
l'ajustage d'aspiration (12) de la pompe de transfert (11) est relié à une conduite d'aspiration sortant du réservoir (10) et le préfiltre est installé dans la conduite d'aspiration ou en amont de l'orifice d'aspiration de la conduite d'aspiration dans le réservoir (10).

8. Groupe d'aspiration selon l'une quelconque des revendications 1 à 7,
**caractérisé en ce que**
l'ajutage de refoulement de la pompe de transfert (11) comporte un filtre fin ou filtre principal (16) dans la veine débitée.
